# EUROPÄISCHE PATENTANMELDUNG

(11) **EP 4 624 663 A1**
(43) Veröffentlichungstag der Anmeldung: **01.10.2025**
(21) Anmeldenummer: 25158578.2
(22) Anmeldetag: 18.02.2025
(51) Int. Cl.: E01B 26/00, B61K 7/20

(54) **HEMMSCHUH ZUR SELBSTHEMMENDEN SICHERUNG EINER AUF SCHIENEN TRANSPORTIERBAREN EINHEIT**

(30) Priorität: 26.03.2024 DE 102024202875
(71) Anmelder: Siemens Energy Global GmbH & Co. KG, 81739 München (DE)
(72) Erfinder: Hackl, Alexander, 4614 Machtrenk (AT); Bachl, Michael, 4203 Altenberg bei Linz (AT); Dichlberger, Peter, 4020 Linz (AT)

(57) **Zusammenfassung**

Die Anmeldung betrifft einen an einem Schienenkopf (5) einer Schiene (3) arretierbaren Hemmschuh (1) zur Sicherung einer auf Schienen (3) transportierbaren Einheit, insbesondere eines Hochspannungsgeräts, bevorzugt eines Transformators. Um die Position der Einheit auf einfache Weise sicher an einer Schiene zu halten ist vorgesehen, dass der Hemmschuh (1) einen zum zumindest abschnittsweisen Umgreifen des Schienenkopfs (5) ausgestalteten Rahmen (7) und wenigstens ein im Rahmen (7) beweglich gehaltenes Klemmelement (9) umfasst, wobei der Hemmschuh (1) zur Erzeugung einer selbsthemmenden Klemmung der Schiene (3) zwischen dem Rahmen (7) und dem wenigstens einen Klemmelement (9) ausgestaltet ist.

## Beschreibung

Die Erfindung betrifft einen an einem Schienenkopf einer Schiene arretierbaren Hemmschuh zur Sicherung einer auf Schienen transportierbaren Einheit, insbesondere eines Hochspannungsgeräts, bevorzugt eines Transformators.

Einheiten wie Transformatoren und andere Hochspannungsgeräte, beispielsweise Drosseln, werden zum Teil mittels Rollen auf Schienen bewegt. Um nach der endgültigen Positionierung zu verhindern, dass das Hochspannungsgerät sich verschiebt, werden Hemmschuhe eingesetzt.

Um die notwendige Haltekraft zu erreichen, wird wenigstens eine Klammer auf wenigstens eine der Schienen aufgesetzt und mittels Schrauben fixiert. Die Klammer wird auf den Schienenkopf aufgesetzt, umgreift diesen und wird durch die Schrauben derart fixiert, dass die Klammer nach oben gezogen wird. Dabei wird die Klammer gegen die Unterseite des Schienenkopfs gepresst. Die Haltekraft ist speziell in Schienenrichtung von der Reibung abhängig. Die Haltekraft ist damit um den Reibfaktor zwischen Klammer und Schiene reduziert, da die Klemmkraft senkrecht zur Haltekraft eingebracht wird.

Mit der zunehmenden Nachfrage nach Erdbebenbefestigungen steigen auch die Anforderungen an die Hemmschuhe, d.h. es sollten höhere Kräfte übertragen werden. Um die Festigkeit zu erhöhen, gibt es die Möglichkeit einen Bolzen zu installieren, der durch den Hemmschuh und die Schiene ragt. Damit ist die Haltekraft nicht mehr vom Reibfaktor abhängig, sondern von der Festigkeit des Bolzens. Alternativ dazu kann die Anzahl der Hemmschuhe erhöht werden.

Alle Lösungen, bei denen die Haltekraft über den Reibfaktor festgelegt ist, haben den Nachteil, dass dieser Faktor nicht exakt bestimmt werden kann und somit große Sicherheitsfaktoren eingehalten werden müssen. Speziell für die Erdbebenverankerung sind Verbindungen, bei der sich die Haltekraft über einen Reibfaktor ergibt, nur in wenigen Fällen erlaubt. Die gebolzte Lösung hat wieder den Nachteil, dass in die Schiene ein Loch gebohrt werden muss, was nicht ohne weiteres möglich ist.

Die bekannten Varianten zur Erhöhung der Haltekraft sind also aufwendig oder gehen, wie im Falle des Bolzens, mit bleibenden Beschädigungen an der Schiene einher.

Es ist daher die Aufgabe der Erfindung, einen Hemmschuh bereitzustellen, der wenigstens eines der oben genannten Probleme löst und somit einfach und/oder ohne Beschädigungen an der Schiene zu montieren ist.

Diese Aufgabe ist durch einen Hemmschuh nach Anspruch 1 gelöst. Erfindungsgemäß ist vorgesehen, dass der Hemmschuh einen zum zumindest abschnittsweisen Umgreifen des Schienenkopfs ausgestalteten Rahmen und wenigstens ein im Rahmen beweglich gehaltenes Klemmelement umfasst, wobei der Hemmschuh zur Erzeugung einer selbsthemmenden Klemmung der Schiene zwischen dem Rahmen und dem wenigstens einen Klemmelement ausgestaltet ist.

Durch die Selbsthemmung ist zum einen eine zerstörungsfreie Befestigung des Hemmschuhs an der Schiene möglich. Zum anderen kann eine Bewegung des Hemmschuhs relativ zum Klemmelement in der Richtung, in der die Selbsthemmung wirkt, zu einer Erhöhung der Haltekraft führen. Dadurch kann eine wirksame Sicherung der Einheit an der Schiene erreicht werden.

Im Folgenden ist der Einfachheit halber stets ein Hochspannungsgerät, insbesondere ein Transformator, als auf Schienen transportierbare Einheit genannt.

Die Einheit ist jedoch nicht auf Hochspannungsgeräte beschränkt, sondern kann auch ein Objekt sein, welches im Betrieb spannungslos ist oder überhaupt nicht dem Gebiet der Hochspannungstechnik zuzuordnen ist. Prinzipiell ist der erfindungsgemäße Hemmschuh auch für Personen- oder Güterwaggons oder andere Schienenfahrzeuge einsetzbar.

Die Erfindung betrifft auch eine auf Schienen transportierbare Einheit, insbesondere ein Hochspannungsgerät, bevorzugt einen Transformator, wobei die Einheit mit wenigstens einem erfindungsgemäßen Hemmschuh versehen ist.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung des Hemmschuhs kann das wenigstens eine Klemmelement in einem an der Schiene montierten Zustand des Hemmschuhs an der Schiene beweglich gehalten und dazu ausgestaltet sein, entlang der Schiene in eine Klemmposition bewegbar zu sein, in der das Klemmelement den Rahmen mit der Schiene verklemmt. In der Klemmposition des wenigstens einen Klemmelements kann bereits eine ausreichend hohe Haltekraft erzeugt sein, um den Hemmschuh an der Schiene zu fixieren. Die Richtung entlang der Schiene, in der das Klemmelement beweglich gehalten ist, verläuft in der Regel nicht exakt parallel zur Schiene. Darauf ist weiter unten eingegangen.

Bevorzugt ist das Klemmelement in die Richtung, in der die Selbsthemmung wirkt, vorspannbar. Wirkt die Vorspannkraft in die gleiche Richtung wie die benötigte Haltekraft, dann lässt sich der Effekt der Selbsthemmung auf einfache Weise nutzen, wie beispielsweise bei einer Klemmschnalle eines Gürtels. Die Haltekraft ist dann unabhängig vom Reibfaktor über die Vorspannung einstellbar.

Die Haltekraft kann über die Vorspannung hinaus erhöht werden, indem der Reibungskoeffizient zwischen Klemmelement und Schiene und der Reibungskoeffizient zwischen Klemmelement und Rahmen unterschiedlich gewählt werden. Dies kann durch die Auswahl des Materials, die Beschaffenheit der Oberfläche, dem Einbringen entsprechender Beläge oder durch andere Maßnahmen erfolgen.

Das wenigstens eine Klemmelement ist vorzugsweise in wenigstens einer Führung im Rahmen beweglich gehalten, wobei die Führung in einem an der Schiene montierten Zustand des Hemmschuhs schräg zur Schiene, insbesondere schräg nach oben, verläuft. Die Haltekraft ist damit unabhängig vom Reibfaktor. Die Haltekraft ist dann, analog zu einem Keil, von dem Winkel zwischen Führung und Schiene abhängig.

Das Klemmelement liegt in einem an der Schiene montierten Zustand des Hemmschuhs bevorzugt an einer Oberseite der Schiene, also auf dem Schienenkopf, an. Eine Bewegung des Klemmelements in der schrägen Führung in Richtung der Schiene führt somit zu einem Anheben des Rahmens.

Da der Rahmen den Schienenkopf, insbesondere mit einem Greifabschnitt, umgreift, wird der Rahmen bei dieser Bewegung nach oben gezogen und der Greifabschnitt gegen die Unterseite des Schienenkopfs gepresst. Würde der Rahmen, beispielsweise bei einer Bewegung des Hochspannungsgeräts, in entgegengesetzter Richtung entlang der Schiene bewegt werden, würde das Klemmelement den Rahmen stärker nach oben ziehen, bis die Haltekraft so groß ist, dass eine Bewegung des Rahmens relativ zur Schiene nicht mehr möglich ist.

Die wenigstens eine Führung umfasst bevorzugt einen, insbesondere geradlinigen, Schlitz im Rahmen. Durch den Schlitz ragt das wenigstens eine Klemmelement hindurch. Eine Schlitzhöhe und ein Durchmesser des Klemmelements sind dabei vorzugsweise so aufeinander abgestimmt, dass das Klemmelement gerade ausreichend Spiel hat, um entlang des Schlitzes beweglich zu sein.

Das Klemmelement kann einen polygonalen, bevorzugt einen rechteckigen, besonders bevorzugt einen quadratischen Querschnitt aufweisen. Alternativ dazu kann das Klemmelement im Querschnitt die Form eines Trapezes oder eines Parallelogramms aufweisen oder auch rund sein. Mit wenigstens einer, vorzugsweise ebenen, Seite kann es an einer den Schlitz begrenzenden Innenwandung im Rahmen anliegen. Dadurch kann das Klemmelement auch gegen Verdrehen gesichert sein.

Eine besonders stabile Anordnung kann dadurch erhalten werden, dass der Rahmen zwei sich in einem an der Schiene montierten Zustand des Hemmschuhs über die Schiene gegenüberliegende Führungen für das wenigstens eine Klemmelement aufweist. Die zwei Führungen sind vorzugsweise parallel zueinander angeordnet. Das Klemmelement ist dann quer zur Schiene ausgerichtet und wird von beiden Seiten der Schiene in den Führungen gehalten.

Gemäß einer weiteren vorteilhaften Ausgestaltung des erfindungsgemäßen Hemmschuhs ist wenigstens ein Vorspannelement vorgesehen, dass ausgestaltet ist, das wenigsten eine Klemmelement in die Klemmposition zu bewegen. Dadurch kann eine Vorspannung erzeugt werden. Das Vorspannelement kann insbesondere ein Gewindebolzen sein, der mit einem Innengewinde im Klemmelement wechselwirkend angeordnet ist. Eine Drehung des Bolzens kann zum Verschieben des Klemmelements führen.

Wie oben beschrieben, wirkt ein einzelnes Klemmelement in nur einer Richtung entlang der Schiene. Um auch eine Selbsthemmung in der entgegengesetzten Richtung zu erzeugen, kann das Hochspannungsgerät mit zwei erfindungsgemäßen Hemmschuhen versehen sein, deren Rahmen und Klemmelemente zur Erzeugung von in entgegengesetzten Richtungen wirkenden Selbsthemmungen ausgestaltet sind.

Alternativ dazu kann ein Hemmschuh vorgesehen sein, der zur Selbsthemmung in zwei entgegengesetzten Richtungen entlang der Schiene ausgestaltet ist. Diese im Folgenden beschriebene Variante wird gegenüber der oben genannten Variante mit je einem Hemmschuh für eine Richtung bevorzugt.

Um Selbsthemmung in zwei entgegengesetzten Richtungen entlang der Schiene an einem Hemmschuh zu erzeugen, ist bevorzugt vorgesehen, dass der Hemmschuh zwei Klemmelemente aufweist, die zur Selbsthemmung des Hemmschuhs an der Schiene in entgegengesetzten Richtungen ausgestaltet sind.

Dabei ist vorzugsweise jedes Klemmelement in einer eigenen Führung aufgenommen, wobei die beiden Führungen spiegelsymmetrisch zueinander ausgerichtet sind.

Um einen einfach aufgebauten Rahmen zu erhalten, können die beiden Führungen einen gemeinsamen Schlitz umfassen. Der gemeinsame Schlitz kann die beiden einzelnen Schlitze der einzelnen Führungen kombinieren. Da die beiden einzelnen Schlitze in unterschiedlicher Ausrichtung schräg zur Schiene verlaufen, kann der gemeinsame Schlitz eine gewinkelte Form, insbesondere eine Dachform, aufweisen.

Um beide Klemmelemente mit einer Vorspannung versehen zu können, ist bevorzugt ein gemeinsames Vorspannelement vorgesehen, das ausgestaltet ist, die beiden Klemmelemente in ihre jeweiligen Klemmpositionen zu bewegen.

Insbesondere kann das gemeinsame Vorspannelement ausgestaltet sein, die beiden Klemmelemente auseinanderzutreiben. Das wenigstens eine gemeinsame Vorspannelement ist vorzugsweise ein Gewindebolzen. Jedes Klemmelement kann ein entsprechendes Innengewinde aufweisen. Der Gewindebolzen und die Innengewinde des Klemmelements sind vorzugsweise so aufeinander abgestimmt, dass eine Drehung des Bolzens dazu führt, dass die Klemmelemente entweder aufeinander zu oder voneinander weg bewegt werden. Dies kann durch entsprechende Rechts-Links-Gewinde realisiert werden. Je nach Ausrichtung der Führungen kann eine der Bewegungen zur Erzeugung der Vorspannung beider Klemmelemente führen.

Bevorzugt sind die Führungen derart angeordnet, dass die Vorspannung erzeugt wird, wenn die Klemmelemente durch den Bolzen auseinandergedrückt werden. Fügt man durch Drehung des Bolzens eine Vorspannung auf die Klemmelemente, so bewegen sich diese nach außen, ziehen den Rahmen nach oben und klemmen ihn an der Schiene fest. Die Haltekraft ergibt sich dann nur noch aus der Vorspannkraft und nicht mehr aus dem Reibfaktor.

Zur weiteren Erläuterung der Erfindung wird im nachfolgenden Teil der Beschreibung auf Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Für Elemente mit gleichem Aufbau und/oder gleicher Funktion werden stets dieselben Bezugszeichen verwendet.

Es zeigen:
- Fig. 1: eine bevorzugte Ausführungsform eines erfindungsgemäßen Hemmschuhs an einer Schiene in einer perspektivischen, freigeschnittenen Ansicht;
- Fig. 2: einen Schnitt durch den Hemmschuh aus Figur 1 an der mit I-I markierten Stelle in Fig.1,
- Fig. 3: eine schematische Darstellung einer vorteilhaften Ausführungsform von Klemmelementen für den Hemmschuh der Figuren 1 und 2;
- Fig. 4: eine schematische Darstellung eines Vorspannelements für den Hemmschuh der Figuren 1 bis 3; und
- Fig. 5-8: schematische Darstellungen weiterer Ausführungsformen erfindungsgemäßer Hemmschuhe.

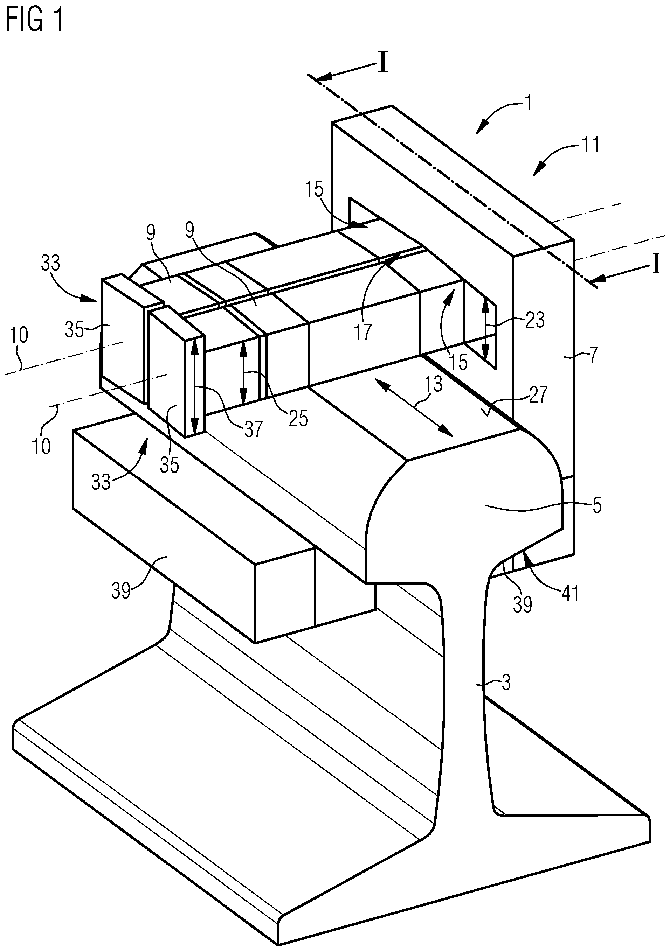

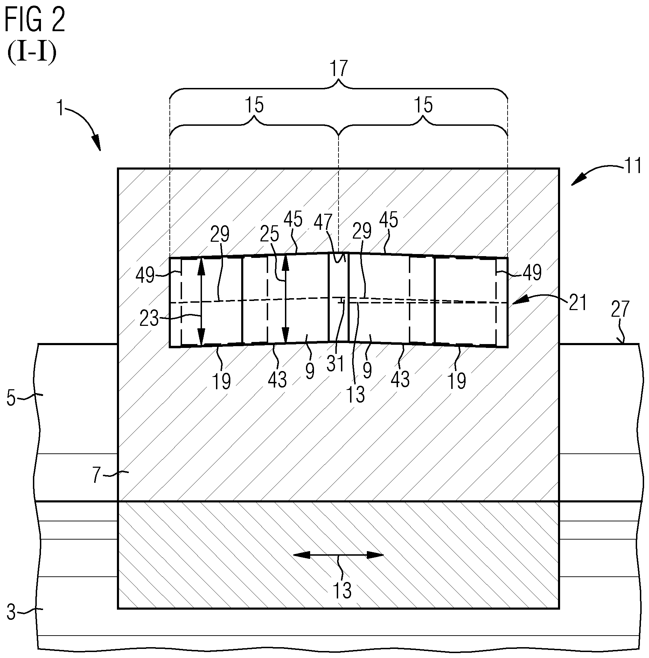

Im Folgenden ist eine bevorzugte Ausführungsform eines erfindungsgemäßen Hemmschuhs 1 mit Bezug auf die Figuren 1 und 2 beschrieben. Zum besseren Verständnis ist der Hemmschuh 1 an einem Stück einer Schiene 3 dargestellt.

Der besseren Sichtbarkeit halber ist ein Teil des Hemmschuhs 1 nicht dargestellt. Ebenfalls nicht dargestellt ist eine Einheit wie ein Hochspannungsgerät, die auf der Schiene 3 transportierbar ist. Im Folgenden ist als Beispiel für die Einheit stets ein Hochspannungsgerät genannt, welches vorzugsweise ein Transformator ist.

Das Hochspannungsgerät weist bevorzugt wenigstens einen Hemmschuh 1 auf, der unverlierbar mit dem Hochspannungsgerät verbunden ist. In der Regel wird das Hochspannungsgerät auf einem Schienenpaar transportiert. Die zweite Schiene sowie die Räder, mit denen das Hochspannungsgerät auf den Schienen bewegt werden kann, sind der Sichtbarkeit halber jedoch ebenfalls nicht gezeigt.

Der Hemmschuh 1 ist an einem Schienenkopf 5 der Schiene 3 arretierbar. Dadurch kann das mit dem Hemmschuh 1 verbundene Hochspannungsgerät an der Schiene 3 gesichert werden.

Der Hemmschuh 1 umfasst einen zum abschnittsweisen Umgreifen des Schienenkopfs ausgestalteten Rahmen 7 und zwei im Rahmen 7 beweglich gehaltene Klemmelemente 9.

Der Hemmschuh 1 ist zur Erzeugung einer selbsthemmenden Klemmung der Schiene 3 zwischen dem Rahmen 7 und den Klemmelementen 9 ausgestaltet.

Die Klemmelemente 9 lassen sich in einem an der Schiene 3 montierten Zustand 11 des Hemmschuhs 1 entlang einer Längsrichtung 13 der Schiene 3 bewegen.

Jedes Klemmelement 9 ist in zwei Führungen 15, die sich im an der Schiene montierten Zustand 11 über die Schiene 3 gegenüberliegen, beweglich gehalten. In Figur 1 sind nur auf einer Seite der Schiene 3 je eine Führung 15 pro Klemmelement 9 dargestellt.

Die Führungen 15 auf einer Seite der Schiene gehen ineinander über und bilden eine gemeinsame Führung 17.

Jede der Führungen 15 umfasst einen Schlitz 19, der sich durch den Rahmen 7 erstreckt. Die beiden Schlitze 19 auf einer Seite der Schiene 3 bilden einen durchgängigen Schlitz 21.

Bevorzugt hat jedes Klemmelement 9 eine insgesamt längliche Form und erstreckt sich entlang einer Längsachse 10.

Jedes Klemmelement 9 erstreckt sich durch die beiden sich über die Schiene 3 gegenüberliegenden Schlitze 15 und verläuft dabei mit seiner Längsachse 10 senkrecht zur Längsrichtung 13 der Schiene 3.

Zumindest in dem Bereich, in dem die Klemmelemente 9 die Schlitze 19 durchdringen und sich über die Schiene 3 erstrecken, weisen diese einen rechteckigen, bevorzugt einen quadratischen oder auch runden Querschnitt auf.

Jeder Schlitz 19 weist eine Schlitzhöhe 23 und jedes Klemmelement 9 einen Durchmesser 25 auf. Schlitzhöhe 23 und Durchmesser 25 sind derart aufeinander abgestimmt, dass die Klemmelemente 9 in den Schlitzen 19 entlang der Längsrichtung 13 bewegbar sind, sich aber nicht verdrehen können, insbesondere nicht um ihre Längsachsen 10.

Jede Führung 15, bzw. jeder Schlitz 19 verläuft schräg in Bezug auf die Längsrichtung 13, insbesondere schräg zu einer Oberseite 27 des Schienenkopfs 5. Jeder Schlitz 19 weist also eine Steigung auf.

Auf der rechten Seite der Figur 2 ist eine Schlitzrichtung 29 im Vergleich zur gestrichelt angedeuteten Längsrichtung 13 der Schiene 3 dargestellt. Die beiden Richtungen schließen den Winkel 31 ein.

Der durchgängige Schlitz 21 weist insgesamt eine Dachform auf, da sich die beiden Schlitze 19 voneinander weg und gleichzeitig unter Bildung des Winkels 31 nach unten erstrecken. Beide Schlitze 19, bzw. beide Führungen 15 sind zueinander spiegelsymmetrisch angeordnet. Als Alternative zur Dachform kann der durchgängige Schlitz 21 andere Formen, insbesondere eine V-Form aufweisen.

Um den Verlust oder das Verkanten der Klemmelemente 9 zu verhindern, sind diese an ihren nach außen aus dem Rahmen 7 herausragenden Enden 33 mit, insbesondere flanschartigen, Sperrelementen 35 versehen, deren Durchmesser 37 jeweils größer als die Schlitzhöhe 23 sind. Die Sperrelemente 35 können plattenförmig sein.

Der Rahmen 7 weist im an der Schiene 3 montierten Zustand 11 auf jeder Seite der Schiene 3 je einen Greifabschnitt 39 auf, der zur Anlage an einer Unterseite 41 des Schienenkopfes 5 ausgestaltet ist.

Im Folgenden ist die Funktion des oben mit Bezug auf die Figuren 1 und 2 beschriebenen Hemmschuhs 1 erläutert.

Bevor der Hemmschuh 1 durch die Klemmelemente 9 an der Schiene 3 arretiert wird, können sich die Klemmelemente 9 nahe beieinander befinden, wie es in den Figuren 1 und 2 dargestellt sind.

Da die Führungen 15 schräg verlaufen, sind die Klemmelemente 9 in oberen Bereichen der Führungen 15 angeordnet. Vorzugsweise liegen die Klemmelemente 9 dabei auf dem Schienenkopf 5 auf, wobei sie jeweils mit einer unteren Flachseite 43 an der Oberseite 27 des Schienenkopfs 5 flächig anliegen.

Jedes Klemmelement 9 weist eine der unteren Flachseite 43 gegenüberliegende obere Flachseite 45 auf. An diesen oberen Flachseiten 45 liegt eine obere Umwandung 47 des Schlitzes 21 an.

In alternativen, nicht dargestellten, Ausführungsformen können die Klemmelemente 9 statt Flachseiten 43, 45 aufzuweisen, andere Formen aufweisen. Beispielsweise können die Klemmelemente 9 runde oder polygonale Querschnitte aufweisen.

Werden die Klemmelemente 9 nun voneinander wegbewegt, bewegen sie sich in Bezug auf die Führungen 15 nach unten. Da sie aber auf der Schiene 3 aufliegen und die Schiene 3 eine Bewegung der Klemmelemente nach unten verhindert, wird stattdessen der Rahmen 7 nach oben gezogen. Dabei wird der Greifabschnitt 39 des Rahmens 7 gegen die Unterseite 41 des Schienenkopfs 5 gepresst und erzeugt so eine Haltekraft zwischen Hemmschuh 1 und Schiene 3. Ist ausreichend Haltekraft erzeugt, befinden sich die Klemmelemente 9 in Klemmpositionen 49, die in Figur 2 gestrichelt angedeutet sind.

Würde nun eine Kraft auf den Hemmschuh 1 entlang einer Richtung parallel zur Schiene 3 wirken, die den Hemmschuh 1 entlang der Schiene 3 bewegt, könnte eines der Klemmelemente 9 aus seiner Klemmposition 49 herausgelöst werden.

Das jeweils andere Klemmelement 9 würde jedoch in die entgegengesetzte Richtung im Schlitz 21 bewegt werden und den Rahmen 7 weiter nach oben ziehen. Dadurch würde die Haltekraft erhöht und eine Bewegung des Hemmschuhs 1 und des damit verbundenen Hochspannungsgeräts verhindert werden.

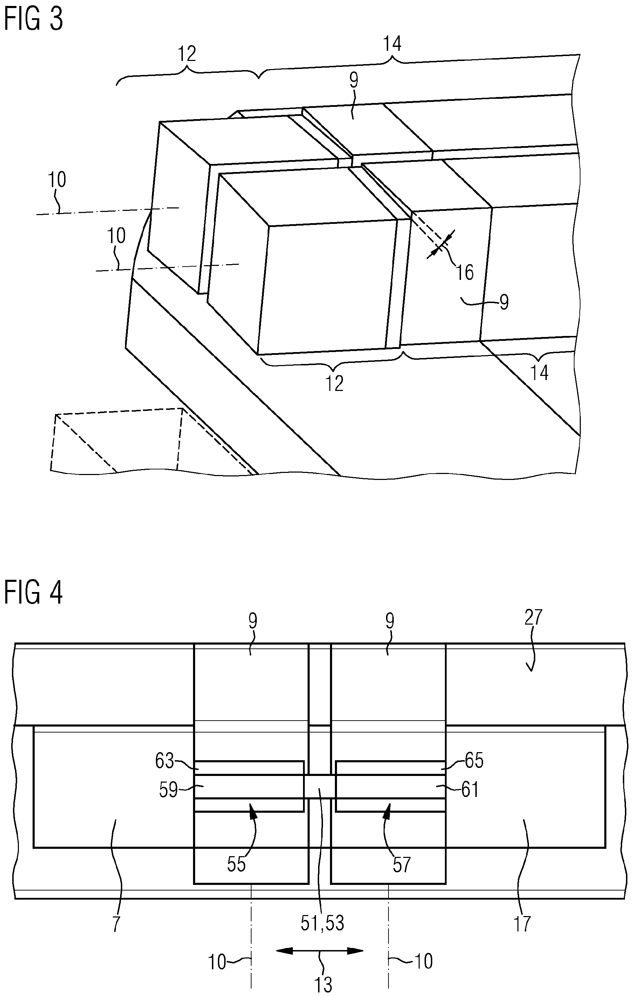

Fig. 3 zeigt eine bevorzugte Ausführungsform der Klemmelemente 9. Bei dieser Ausführungsform sind Endabschnitte 12 der Klemmelemente 9 gegenüber den übrigen Abschnitten 14 um die Längsachsen 10 um jeweils einen Winkel 16 gedreht. Dabei sind die Endabschnitte 12 der Klemmelemente 9 in jeweils entgegengesetzter Richtung gedreht.

Die Winkel 16 entsprechen vorzugsweise den Winkeln 31, die zwischen Schlitzrichtung 29 und Längsrichtung 13 eingeschlossen sind. Dadurch können die Klemmelemente 9 in den Endabschnitten 12 flächig an den Innenseiten der Schlitze 9 und in den übrigen Abschnitten 14 flächig auf der Oberseite 27 des Schienenkopfes 5 aufliegen.

In alternativen, nicht dargestellten, Ausführungsformen des Klemmelements 9, beispielsweise runde oder polygonale, ergeben sich andere Auflageformen und Winkel.

Um die Klemmelemente 9 ausreichend in Richtung ihrer Klemmpositionen 49 vorzuspannen und um das oben beschriebene Verlassen der Klemmpositionen 49 zu verhindern, kann wenigstens ein Vorspannelement 51 vorgesehen sein. Auf dieses Vorspannelement 51 ist im Folgenden mit Bezug auf die Figur 4 eingegangen.

Das Vorspannelement 51 ist vorzugsweise ein Bolzen 53, der an seinen Enden 55, 57 jeweils ein Außengewinde 59, 61 aufweist, wobei
Jedes Klemmelement 9 ist mit einem Innengewinde 63, 65 versehen. Die beiden Innengewinde 63, 65 sind passend zu den Außengewinden 59, 61 gegenläufig ausgestaltet
Eine Drehung des Bolzens 53 führt zu einer gleichzeitigen Bewegung beider Klemmelemente 9. Je nach Drehrichtung des Bolzens 53 werden die Klemmelemente 9 voneinander weg oder aufeinander zu bewegt.

Werden die beiden Klemmelemente 9 voneinander wegbewegt, können sie vorgespannt und dadurch die gewünschte Haltekraft eingestellt werden. Darüber hinaus kann das Zusammenwirken der Klemmelemente 9 mit dem Bolzen 53 eine ungewünschte Bewegung der Klemmelemente 9 aus der Klemmposition 49 heraus verhindern.

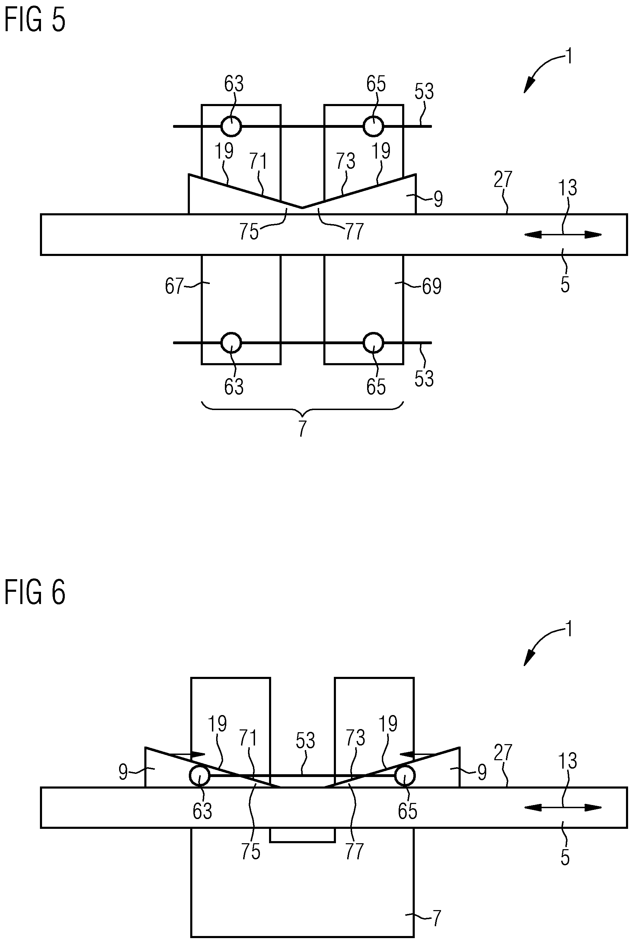

Im Folgenden sind weitere vorteilhafte Arten zur Herstellung der Selbsthemmung an Ausführungsformen des erfindungsgemäßen Hemmschuhs 1 mit Bezug auf die Figuren 5 bis 8 beschrieben.

Die Figuren 5 bis 8 sind dabei lediglich schematische Darstellungen, die die jeweilige Funktionsweise erläutern sollen. Der Kürze halber ist jeweils nur auf die Unterschiede zu den zuvor beschriebenen Ausführungsformen eingegangen.

Fig. 5 zeigt eine Ausführungsform des Hemmschuhs 1, bei der im Gegensatz zu der oben dargestellten Ausführungsform, der Rahmen 7 zweiteilig und das Klemmelement 9 einteilig ausgestaltet sind.

Der Rahmen besteht aus den beiden Rahmenteilen 67 und 69, die gegeneinander entlang der Schienenrichtung 13 verschiebbar sind.

Das Klemmelement 9 weist zwei gegenläufig orientierte Schrägen 71 und 73 auf, sodass das Klemmelement 9 im Querschnitt die Form zweier Keile, deren Spitzen 75, 77 aneinander liegen, aufweist.

Jedes der Rahmenteile 67, 69 ist mit einem Schlitz 19 versehen, in dem eine Hälfte des Klemmelements 9 aufgenommen ist.

Werden die Rahmenteile 67, 69 parallel zur Schienenrichtung 13 voneinander wegbewegt, rutschen sie die Schrägen 71, 73 hinauf, so dass eine Klemmung zwischen den Rahmenteilen 67, 69 und dem Schienenkopf 5 erzeugt wird.

Zur Bewegung der beiden Rahmenteile 67, 69 gegeneinander kann wenigstens ein Bolzen 53, vorzugsweise mehrere Bolzen 53, vorgesehen sein.

Der Bolzen 53 kann, wie bei der mit Bezug auf die Figuren 1 bis 4 beschriebenen Ausführungsform, mit zwei gegenläufigen Außengewinden versehen sein (in Fig. 5 nicht gezeigt).

Jedes Rahmenteil 67, 69 kann je Bolzen 53 mit einem passendend Innengewinde 63, 65 versehen sein, mit dem der Bolzen 53 zusammenwirken kann. Eine Drehung des Bolzens 53 führt je nach Drehrichtung zur Bewegung der Rahmenteile 67, 69 aufeinander zu oder voneinander weg.

In Fig. 6 ist eine Ausführungsform des Hemmschuhs 1 dargestellt, bei der die Schlitze 19, wie bei der mit Bezug auf die Figuren 1 bis 4 dargestellten Ausführungsform, im selben Rahmen 7 gebildet sind.

Die zwei Klemmelemente 9 weisen jeweils eine Keilform auf, wobei jedes Klemmelement 9 eine Schräge 71, 73 aufweist. Die Schrägen 71, 73 ähneln den Schrägen der mit Bezug auf die Fig. 5 beschriebenen Ausführungsform.

Die Spitzen 75, 77 der Keilformen sind aufeinander weisend angeordnet. Schlitze 19 im Rahmen 7 sind entsprechend den Schrägen 71, 73 geformt.

Wenigstens ein Bolzen 53 verbindet die beiden Klemmelemente 9 miteinander, wobei jedes der Klemmelemente 9 mit einem Innengewinde 63, 65 versehen ist, das mit dem jeweiligen Außengewinde des Bolzens 53 zusammenwirkt.

Eine Drehung des Bolzens 53 bewirkt eine Relativbewegung der Klemmelemente 9 gegeneinander. Zum Herstellen der Klemmverbindung zwischen Rahmen 7 und Schienenkopf 5 werden die keilförmigen Klemmelemente 9 aufeinander zu bewegt. Dies ist mit den Pfeilen in Fig. 6 angedeutet.

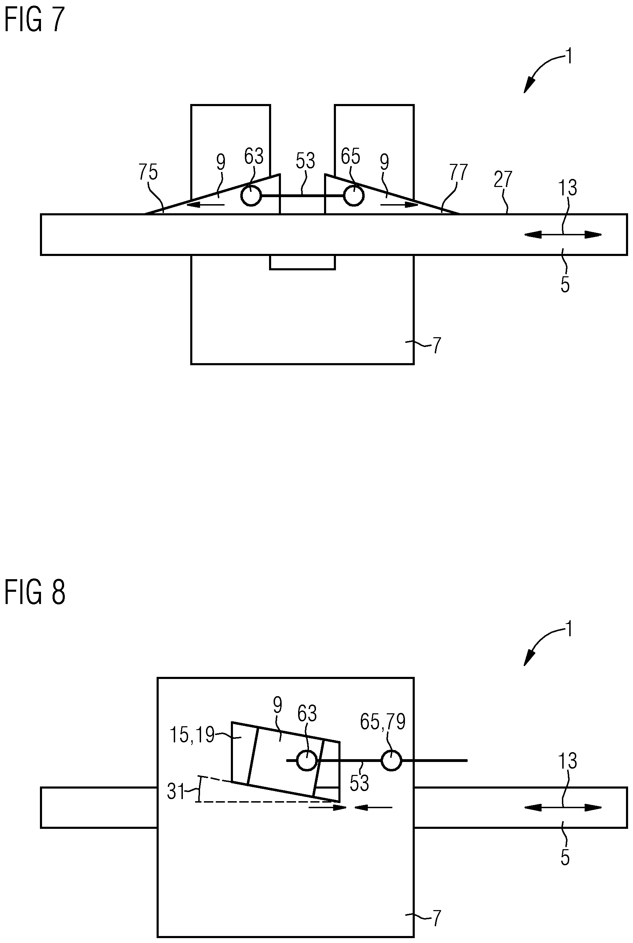

Die in Fig. 7 dargestellte Ausführungsform des Hemmschuhs 1 entspricht der Ausführungsform aus Fig. 6, wobei die keilförmigen Klemmelemente 9 mit ihren Spitzen 75, 77 voneinander weg weisend angeordnet sind. Die Schlitze 19 sind an die Form der Klemmelemente 9 angepasst.

Zur Herstellung der Klemmverbindung zwischen Rahmen 7 und Schienenkopf 5 werden die beiden Klemmelemente 9 durch Drehung des Bolzens 53 voneinander weg bewegt. Dies ist in Fig. 7 durch die beiden Pfeile angedeutet.

Die in Fig. 8 dargestellte Ausführungsform des Hemmschuhs 1 entspricht im Wesentlichen der mit Bezug auf die Figur 4 beschriebenen Ausführungsform, mit dem Unterschied, dass nur ein Klemmelement 9 vorgesehen ist.

Zur Bewegung und zur Sicherung des Klemmelements 9 ist dieses über den Bolzen 53 mit dem Rahmen 7 verbunden.

An einem Ende ist der Bolzen 53 mit seinem Außengewinde im Innengewinde 63 des Klemmelements 9 aufgenommen und funktionell mit diesem gekoppelt.

An seinem vom Klemmelement 9 wegweisenden Ende ist der Bolzen 53 mit seinem Außengewinde in einem Durchgangsloch 79 im Rahmen 7 aufgenommen und vorzugsweise mit einem Innengewinde 65 im Durchgangsloch 79 funktionell gekoppelt.

Eine Drehung des Bolzens 53 bewirkt eine Bewegung des Klemmelements 9 im Schlitz 19 relativ zu dem im Rahmen 7 angeordneten Innengewinde 65.

Je nach Orientierung des Schlitzes 19 im Rahmen 7, bzw. Des Winkels 31, kann die Klemmverbindung durch eine Bewegung des Klemmelements 9 zum Durchgangsloch 79, bzw. zum Innengewinde 65, hin oder von diesem weg hergestellt werden.

In dem in Fig. 8 dargestellten Beispiel kann die Klemmverbindung durch eine Bewegung des Klemmelements 9 zum Durchgangsloch 79, bzw. zum Innengewinde 65, hin erzeugt werden. Dies ist in Fig. 8 durch die Pfeile angedeutet.

### Bezugszeichen

- 1: Hemmschuh
- 3: Schiene
- 5: Schienenkopf
- 7: Rahmen
- 9: Klemmelement
- 10: Längsachse
- 11: an der Schiene montierter Zustand
- 12: Endabschnitt
- 13: Längsrichtung der Schiene
- 14: Abschnitt
- 15: Führung
- 16: Winkel
- 17: gemeinsame Führung
- 19: Schlitz
- 21: durchgängiger Schlitz
- 23: Schlitzbreite
- 25: Durchmesser eines Klemmelements
- 27: Oberseite des Schienenkopfs
- 29: Schlitzrichtung
- 31: Winkel
- 33: Enden des Klemmelements
- 35: Sperrelement
- 37: Durchmesser des Sperrelements
- 39: Greifabschnitt
- 41: Unterseite des Schienenkopfs
- 43: untere Flachseite
- 45: obere Flachseite
- 47: Umwandung des durchgängigen Schlitzes
- 49: Klemmposition
- 51: Vorspannelement
- 53: Bolzen
- 55, 57: Enden
- 59, 61: Außengewinde
- 63, 65: Innengewinde
- 67, 69: Rahmenteil
- 71, 73: Schräge
- 75, 77: Keilspitze
- 79: Durchgangsloch

## Patentansprüche

1. An einem Schienenkopf (5) einer Schiene (3) arretierbarer Hemmschuh (1) zur Sicherung einer auf Schienen (3) transportierbaren Einheit, insbesondere eines Hochspannungsgeräts wie eines Transformators, umfassend einen zum zumindest abschnittsweisen Umgreifen des Schienenkopfs (5) ausgestalteten Rahmen (7) und wenigstens ein im Rahmen (7) beweglich gehaltenes Klemmelement (9), wobei der Hemmschuh (1) zur Erzeugung einer selbsthemmenden Klemmung der Schiene (3) zwischen dem Rahmen (7) und dem wenigstens einen Klemmelement (9) ausgestaltet ist.

2. Hemmschuh (1) nach Anspruch 1, wobei das wenigstens eine Klemmelement (9) in einem an der Schiene (3) montierten Zustand (11) des Hemmschuhs (1) auf einer Oberseite (27) des Schienenkopfs (5) aufliegt und ein Greifabschnitt (39) des Rahmens (7) an einer Unterseite (41) des Schienenkopfs (5) anliegt.

3. Hemmschuh (1) nach einem der vorangehenden Ansprüche, wobei das wenigstens eine Klemmelement (9) in wenigstens einer Führung (15, 17) im Rahmen (7) beweglich gehalten ist, die in einem an der Schiene (3) montierten Zustand (11) des Hemmschuhs (1) schräg zur Schiene (3) verläuft.

4. Hemmschuh (1) nach Anspruch 3, wobei die Führung (15, 17) wenigstens einen Schlitz (19, 21) im Rahmen (7) umfasst, durch den das wenigstens eine Klemmelement (9) hindurchragt.

5. Hemmschuh (1) nach Anspruch 3 oder 4, wobei der Rahmen (7) zwei sich in einem an der Schiene (3) montierten Zustand (11) des Hemmschuhs (1) über die Schiene (3) gegenüberliegende Führungen (15, 17) für das wenigstens eine Klemmelement (9) aufweist.

6. Hemmschuh (1) nach einem der vorangehenden Ansprüche, wobei wenigstens ein Vorspannelement (51) vorgesehen ist, das ausgestaltet ist, das wenigstens eine Klemmelement (9) in eine Klemmposition (49) zu bewegen.

7. Hemmschuh (1) nach einem der vorangehenden Ansprüche, wobei der Hemmschuh (1) zwei Klemmelemente (9) aufweist, die zur Selbsthemmung des Hemmschuhs (1) an der Schiene (3) in entgegengesetzten Richtungen ausgestaltet und angeordnet sind.

8. Hemmschuh (1) nach Anspruch 7, wobei jedes Klemmelement (9) in einer eigenen Führung (15) aufgenommen ist, und die beiden Führungen (15) spiegelsymmetrisch zueinander ausgerichtet sind.

9. Hemmschuh (1) nach Anspruch 8, wobei die beiden Führungen (15) einen durchgängigen Schlitz (21) zur Aufnahme beider Klemmelemente (9) umfassen.

10. Hemmschuh (1) nach einem der Ansprüche 7 bis 9, wobei ein gemeinsames Vorspannelement (51) vorgesehen ist, das ausgestaltet ist, die beiden Klemmelemente (9) in ihre jeweiligen Klemmpositionen (49) zu bewegen.

11. Hemmschuh (1) nach Anspruch 10, wobei das gemeinsame Vorspannelement (51) ausgestaltet ist, die beiden Klemmelemente (9) auseinanderzutreiben oder zusammenzuziehen.

12. Hemmschuh (1) nach einem der Ansprüche 3 bis 11, wobei der Reibungskoeffizient zwischen Klemmelement (9) und einer Oberseite (27) des Schienenkopfs (5) größer ist als zwischen Klemmelement (9) und der Führung (15, 17) im Rahmen (7).

13. Auf Schienen (3) transportierbare Einheit, insbesondere auf Schienen transportierbares Hochspannungsgerät, bevorzugt ein Transformator, wobei die Einheit mit wenigstens einem Hemmschuh (1) nach einem der vorangehenden Ansprüche versehen ist.
